# EUROPEAN PATENT SPECIFICATION

(11) **EP 3 183 147 B1**
(45) Date of publication and mention of the grant of the patent: **13.01.2021**
(21) Application number: 15753130.2
(22) Date of filing: 13.08.2015
(51) Int. Cl.: B60T 15/02, B60T 8/32, B60T 15/52

(54) **VALVE ARRANGEMENT**
VENTILANORDNUNG
SYSTÈME DE VALVES

(30) Priority: 22.08.2014 GB 201414974
(43) Date of publication of application: 28.06.2017
(73) Proprietor: Knorr-Bremse Rail Systems (UK) Limited, Hampton Park East Melksham Wiltshire SN12 6TL (GB)
(72) Inventor: HEMMINGS, Mark, Melksham Wiltshire SN 12 6TL (GB)
(74) Representative: Moore, David Simon
(86) International application number: PCT/GB2015/000238
(87) International publication number: WO 2016/027045

(56) References cited:
- WO-A2-2009/071913
- DE-A1- 2 727 762
- US-A- 3 966 269

## Description

The invention relates to a valve arrangement for use in a rail brake system having wheel slide protection (WSP).

Railway vehicle braking systems are typically air brakes and such systems incorporating wheel slide control and wheel spin control have established themselves in recent years in the passenger train market. Both wheel slide and wheel spin stem from low wheel to rail adhesion. Wheel slide typically occurs when braking a railway car and is a major cause of wheel damage, which in turn can lead to track damage.

A typical wheel slide control system comprises a sensor on each axle of the vehicle, which sensors measure the speed of rotation of the axle. In use, the outputs of the sensors are then fed to the brake control unit, which compares the values with those of adjacent axles and if the difference exceeds a pre-determined limit, releases and re-applies the brake pressure until the axle speed falls within acceptable limits. This system has proven itself in practice and leads to improved braking performance and reduces the probability of damage to wheels and track. The problem of damage to wheels is particularly severe on freight trains, which as a consequence tend to travel more slowly than would otherwise be possible.

Most freight wagons do not have an autonomous electrical power supply, which effectively has prevented the widespread adoption of wheel slide protection in freight trains. Consequently, freight trains tend to travel much more slowly than passenger trains to avoid track damage, in particular that caused by wheel flats caused by wheel slide events.

Freight vehicles generally have large brake cylinders, which leads to a number of problems in particular in relation to the relatively large volumes of air that needs to be moved quickly when releasing the brakes during wheel slide protection requiring the use of high flow valves.

WO2009/071913 discloses a valve arrangement for use in a rail brake system having WSP in which the airflow rate is increased using a supplementary air reservoir during WSP operation.

The present invention therefore seeks to provide a pneumatic valve arrangement to facilitate air movement during wheel slide protection activity.

According to the invention there is provided a valve arrangement for use in a rail brake system having wheel slide protection having an inlet port supplied from a distributor or load relay valve and an outlet port leading to at least one brake cylinder, the arrangement comprising a hold diaphragm adapted to control air flow between the inlet port and the outlet port and a vent diaphragm adapted to control air flow between the outlet port and an exhaust, the hold diaphragm being controlled by a first solenoid, wherein the vent diaphragm is controlled via a further diaphragm, which further diaphragm is in pneumatic connection with the outlet port and is controlled by a further solenoid.

The invention advantageously provides a high flow vent valve, which can be controlled using a low flow solenoid valve, which provides a low power and low cost and reliable solution to the problem of moving large quantities of air during wheel slide protection. The arrangement of the invention enables the movement air more quickly than would otherwise be the case.

Exemplary embodiments will now be described in greater detail with reference to the drawing in which:

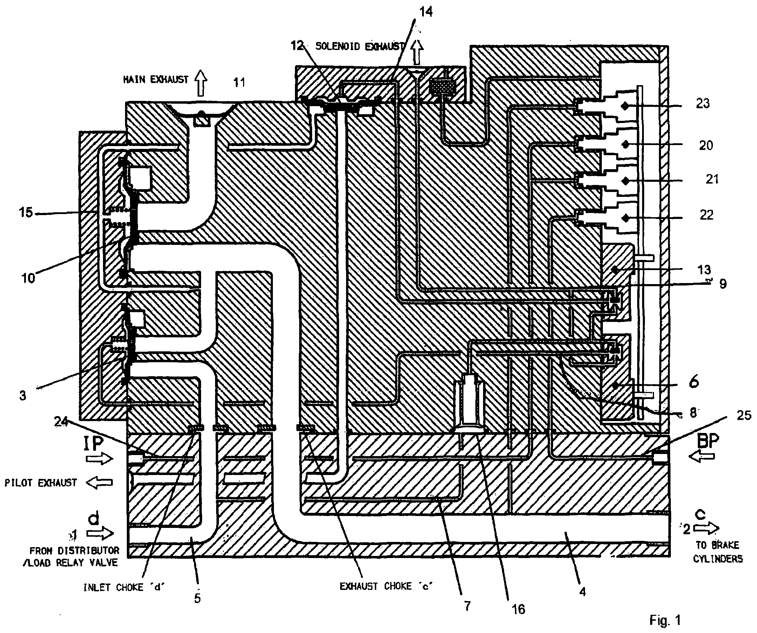

Fig. 1 shows a pneumatic diagram of the valve arrangement

Figure 1 shows a pneumatic diagram of the valve arrangement of the invention comprising an inlet port 1 fed from the distributor valve or load relay valve (not shown) and an outlet port 2 for supplying air pressure to the brake cylinders. The inlet port 1 is connected to the hold diaphragm 3 via inlet passage 5 shown here in the closed position. The hold diaphragm 3 controls the air flow from the inlet port 1 to the outlet passage 4 leading to the outlet port 2 and is piloted by a low flow (hold) solenoid 6. The hold solenoid 6 is connected via a low flow passage 7 to the inlet passage 5 and controls the hold diaphragm 3 via a low flow passage 8. A filter 16 is located in the passage 7 to prevent contamination of the small flow passages. The hold solenoid 6 is further provided with a connection to the solenoid exhaust passage 9.

The valve arrangement further comprises a vent diaphragm 10, shown in the closed position, which is an high flow diaphragm and is adapted to control flow from the outlet passage 4 to the main exhaust 11. The vent diaphragm 10 is controlled by the combination of the vent pilot diaphragm 12 and a vent solenoid 13 and cylinder pressure. The vent solenoid 13 is connected with the low flow passage 7 and the solenoid exhaust passage 9 and connects to the control side of vent pilot diaphragm 12 via low flow passage 14.

The vent pilot diaphragm 12 is controlled by the solenoid 13 controlling the pilot air pressure to the vent diaphragm 10 via passage 15. The passage 15 is further connected via a choke to the outlet passage 4. This enables the vent pilot diaphragm to act as an amplifier. The use of the vent pilot diaphragm in this arrangement enables the low flow, vent solenoid 13 to control the high flow vent diaphragm (10) permitting the control of the movement of a relatively larger volume of air behind the vent diaphragm 10. The volume of air on the control side of the vent diaphragm 10 is approximately three times greater than the volume of air that the vent solenoid 13 vents from the control side of the pilot diaphragm 12.

To provide enhanced functionality, the valve arrangement further comprises four transducers, 20, 21, 22, 23 which are connected to various ports monitoring various pressures to support the WSP activity via an ECU (not shown)

## Claims

1. A valve arrangement for use in a rail brake system having wheel slide protection having an inlet port (1) supplied from a distributor or load relay valve and an outlet port (2) leading to at least one brake cylinder, **characterised in that** the arrangement comprises a hold diaphragm (3) adapted to control air flow between the inlet port and the outlet port and a vent diaphragm (10) adapted to control air flow between the outlet port and an exhaust (11), the hold diaphragm being controlled by a first solenoid, wherein the vent diaphragm (10) is controlled via a further diaphragm (12), which further diaphragm is controlled by a further solenoid (13).

2. A valve arrangement according to Claim 1, wherein the further solenoid is a low flow solenoid (13), which low flow solenoid controls the further diaphragm (12) and thereby the vent diaphragm, which vent diaphragm (10) is high flow.

3. A valve arrangement according to Claim 1 or Claim 2, wherein the volume of air on the control side of the vent diaphragm (10) is approximately three times greater than the volume of air that the further solenoid (13) vents from the control side of the further diaphragm (12).

## Patentansprüche

1. Ventilanordnung zur Anwendung in einer Schienenbremsanlage mit Gleitschutz, umfassend einen von einem Verteiler- oder Lastrelaisventil gespeisten Einlassanschluss (1) und einen zu mindestens einem Bremszylinder führenden Auslassanschluss (2), **dadurch gekennzeichnet, dass** die Anordnung eine Haltemembran (3), die zur Regelung des Luftstroms zwischen dem Einlassanschluss und dem Auslassanschluss ausgelegt ist, und eine Entlüftungsmembran (10), die zur Regelung des Luftstroms zwischen dem Auslassanschluss und einem Auslass (11) ausgelegt ist, umfasst, wobei die Haltemembran von einer ersten Magnetspule gesteuert wird, wobei die Entlüftungsmembran (10) über eine weitere Membran (12) gesteuert wird, die von einer weiteren Magnetspule (13) gesteuert wird.

2. Ventilanordnung nach Anspruch 1, wobei die weitere Magnetspule eine Magnetspule (13) mit niedrigem Förderstrom ist, die die weitere Membran (12) und somit die Entlüftungsmembran (10), die einen hohen Förderstrom aufweist, steuert.

3. Ventilanordnung nach Anspruch 1 oder Anspruch 2, wobei das Luftvolumen auf der Steuerseite der Entlüftungsmembran (10) ungefähr das Dreifache des Luftvolumens beträgt, welches die weitere Magnetspule (13) aus der Steuerseite der weiteren Membran (12) entlüftet.

## Revendications

1. Agencement de soupapes destiné à être utilisé dans un système de frein ferroviaire ayant une protection contre le patinage, ayant un port d'entrée (1) fourni depuis un distributeur ou une soupape de relais de commande et un port de sortie (2) conduisant à au moins un cylindre de frein, **caractérisé en ce que** l'agencement comprend un diaphragme de retenue (3) adapté à commander l'écoulement d'air entre le port d'entrée et le port de sortie, et un diaphragme d'aération (10) adapté à commander l'écoulement d'air entre le port de sortie et un échappement (11), le diaphragme de retenue étant commandé par un premier solénoïde, dans lequel le diaphragme d'aération (10) est commandé par le biais d'un autre diaphragme (12), lequel autre diaphragme est commandé par un autre solénoïde (13).

2. Agencement de soupapes selon la revendication 1, dans lequel l'autre solénoïde est un solénoïde à faible débit (13), lequel solénoïde à faible débit commande l'autre diaphragme (12) et de ce fait le diaphragme d'aération, lequel diaphragme d'aération (10) est à haut débit.

3. Agencement de soupapes selon la revendication 1 ou la revendication 2, dans lequel le volume d'air sur le côté de commande du diaphragme d'aération (10) est approximativement trois fois supérieur au volume d'air que l'autre solénoïde (13) évacue du côté de commande de l'autre diaphragme (12).
